# EUROPEAN PATENT APPLICATION

(11) **EP 4 596 246 A1**
(43) Date of publication of application: **06.08.2025**
(21) Application number: 23872162.5
(22) Date of filing: 22.09.2023
(51) Int. Cl.: B41J 2/165, C11D 7/26, C11D 7/50, C11D 17/08

(54) **CLEANING LIQUID FOR INKJET RECORDING DEVICES**

(30) Priority: 30.09.2022 JP 2022159088
(71) Applicant: Nippon Shokubai Co., Ltd., Osaka-shi, Osaka 541-0043 (JP)
(72) Inventor: IMIYA Hiroto, Suita-shi, Osaka 564-0034 (JP); AKIYAMA Tatsuhiko, Suita-shi, Osaka 564-0034 (JP); NAKAMOTO Keiichi, Suita-shi, Osaka 564-0034 (JP)
(74) Representative: Müller-Boré & Partner Patentanwälte PartG mbB
(86) International application number: PCT/JP2023/034471
(87) International publication number: WO 2024/070936

(57) **Abstract**

The cleaning liquid for inkjet recording devices according to the present invention includes a polyhydric alcohol, a glycol ether, and water, wherein the content ratio of the polyhydric alcohol to the glycol ether is 3 or larger and the water is contained in the cleaning liquid in an amount of 65 mass% or more with respect to 100 mass% of the cleaning liquid, the cleaning liquid having a surface tension of 30 mN/m or more and 45 mN/m or less.

## Description

### TECHNICAL FIELD

The present invention relates to a cleaning liquid for inkjet recording devices.

### BACKGROUND ART

In an inkjet recording device, an ink is ejected in the form of droplets from a large number of nozzles formed in an inkjet head toward a recording medium and is fixed to the recording medium to thereby perform recording. If ink adhesion due to, for example, water vaporization occurs within the device, this causes clogging on the nozzle surface of the inkjet head or in the ink lines of the in-line filter, etc., resulting in an ink ejection failure. The nozzle surface where the ink adhesion has occurred is cleaned, for example, by applying a cleaning liquid thereto and then wiping the surface.

Patent Document 1 describes a maintenance liquid (cleaning liquid) including a water-soluble organic solvent having an SP value of 26 MPa^{1/2} or higher, a water-soluble organic solvent having an SP value of 24 MPa^{1/2} or less, and water in given amounts. In Examples, after ink ejection, a maintenance liquid charged into the inkjet printer was applied with a roller to the nozzle surface of the inkjet head and the nozzle surface of the inkjet head was then wiped with a wiper blade (hydrogenated NBR), before the cleaning properties were ascertained.

Patent Document 2 describes a cleaning liquid for use in cleaning inkjet recording devices which includes a nonionic surfactant having a solubility in 20°C water of less than 0.2 mass%, a first water-soluble organic solvent, which has a solubility parameter (SP value) of 13 or larger, a second water-soluble organic solvent, which has a solubility parameter (SP value) less than 12, and water and which satisfies a specific relationship. In Examples, the cleaning liquids of Examples and Comparative Examples which had been evaporated in an amount corresponding to 30% were brought into contact with a water-based ink and the contact interfaces were visually examined. The cleaning properties were ascertained on the basis of the presence or absence of an agglomerate in the contact interface.

Patent Document 3 describes an ink set for inkjet recording which includes a water-based ink and a water-based cleaning liquid, and in which the water-based cleaning liquid contains a nonionic surfactant, the nonionic surfactant having an amino group in the molecule, and the surface tension of the water-based ink and the surface tension of the water-based cleaning liquid satisfy a given relationship (A). In Examples, after a printing durability test had been conducted in an environment having a temperature of 25°C and a humidity of 60% RH under the conditions of a conveying speed of 350 mm/sec, the water-based cleaning liquids of Examples or Comparative Examples were supplied to the nozzle surface and then a purging operation and a wiping operation were performed. The cleaning properties were ascertained on the basis of whether or not the nozzle surface had ink fouling.

Meanwhile, for restoring an inkjet head nozzle fouled by ink adhesion or the ink lines of, for example, an in-line filter that have been fouled by ink adhesion, there is a method in which a cleaning liquid is filled into the nozzles to clean the nozzles. Patent Document 4 describes a filling liquid for inkjet printing heads which includes a specific amount of an alkylene oxide adduct showing a specific HLB and specific amounts of a humectant and water and which has a specific viscosity and a specific pH. In Examples, a recording head in the state of being filled with a water-based inkjet ink composition (pigment concentration, 12 mass%; pigment/alkali-soluble resin (mass) = 10/4) was allowed to stand in a 50°C oven for 3 months and was thereby made to have an ink ejection failure, and this recording head was filled with each of the cleaning liquids (pH 9 to 13) of Examples and Comparative Examples in the initial filling mode. The cleaning properties thereof were ascertained on the basis of the property of mitigating or eliminating the ejection failure.

There has been a desire for a cleaning liquid for use in inkjet recording devices which has better cleaning ability.

### CITATION LIST

### PATENT LITERATURE

Patent Document 1: JP 2013-10267A
Patent Document 2: JP2020-196781 A
Patent Document 3: JP2018-119078 A
Patent Document 4: JP2018-1510 A

### SUMMARY OF INVENTION

### TECHNICAL PROBLEM

Accordingly, the present invention addresses the problem of providing a cleaning liquid for inkjet recording devices which has excellent cleaning ability.

### SOLUTION TO PROBLEM

The present inventors diligently made investigations in order to solve the problem. As a result, the inventors have discovered that the problem can be solved with a cleaning liquid for inkjet recording devices which includes a polyhydric alcohol, a glycol ether, and water, in which the glycol ether and the polyhydric alcohol have a specific content ratio and the water is contained in a specific content, and which has a specific surface tension. The present invention has been thus completed.

That is, the cleaning liquid for inkjet recording devices according to the present invention includes a polyhydric alcohol, a glycol ether, and water, wherein the content ratio (mass ratio) of the polyhydric alcohol to the glycol ether is 3 or larger and the water is contained in the cleaning liquid in an amount of 65 mass% or more with respect to 100 mass% of the cleaning liquid, the cleaning liquid having a surface tension of 30 mN/m or more and 45 mN/m or less.

### ADVANTAGEOUS EFFECTS OF INVENTION

The present invention can provide a cleaning liquid for inkjet recording devices which has excellent cleaning ability.

### DESCRIPTION OF EMBODIMENTS

The cleaning liquid for inkjet recording devices (hereinafter sometimes referred to simply as "cleaning liquid") of the present invention is a cleaning liquid for inkjet recording devices which includes a polyhydric alcohol, a glycol ether, and water, wherein the content ratio (mass ratio) of the polyhydric alcohol to the glycol ether is 3 or larger and the water is contained in the cleaning liquid in an amount of 65 mass% or more with respect to 100 mass% of the cleaning liquid, the cleaning liquid having a surface tension of 30 mN/m or more and 45 mN/m or less.

In the cleaning liquid of the present invention, (1) the content ratio (mass ratio) of the polyhydric alcohol to the glycol ether is 3 or larger and (2) the water is contained in the cleaning liquid in an amount of 65 mass% or more with respect to 100 mass% of the cleaning liquid, and (3) the cleaning liquid has a surface tension of 30 mN/m or more and 45 mN/m or less. Because of this, a cleaning liquid for inkjet recording devices which has excellent cleaning ability can be provided.

The cleaning liquid of the present invention has excellent ability to clean inkjet head nozzles and ink lines in in-line filters, etc. which have been fouled with inks adherent thereto.

The cleaning liquid of the present invention is suitable for use as a cleaning liquid for inkjet recording devices which preferably employ inks containing a binder component in a large amount (e.g., 5 mass% or more), such as inks for inkjet textile printing (inks for textile printing).

Furthermore, the cleaning liquid of the present invention, although having high cleaning ability, has excellent safety since the cleaning liquid includes a polyhydric alcohol, a glycol ether, and water as main components.

Especially preferred as the polyhydric alcohol contained in the cleaning liquid of the present invention are dihydric alcohols or trihydric alcohols.

Preferred of the dihydric alcohols are glycols. Preferred of the glycols are: chain aliphatic diols such as ethylene glycol, diethylene glycol, triethylene glycol, propylene glycol, dipropylene glycol, 1,2-butanediol, 2-methyl-1,3-butanediol, 1,2-pentanediol, 1,5-pentanediol, and 1,6-hexanediol; and cyclic aliphatic diols such as 1,2-cyclohexanediol and 1,4-cyclohexanediol. The chain aliphatic diols are more preferred. Still more preferred of these are diethylene glycol, triethylene glycol, and propylene glycol.

Preferred of the trihydric alcohols is glycerin.

Preferred of the polyhydric alcohols are diethylene glycol, triethylene glycol, propylene glycol, and glycerin.

Only one of those polyhydric alcohols may be used, or two or more thereof may be used in combination. The inclusion of the polyhydric alcohol can impart humectant properties (non-drying properties) to the cleaning liquid.

The content of the polyhydric alcohol in the cleaning liquid is preferably 0.5 mass% or more and 30 mass% or less, more preferably 5 mass% or more and 27 mass% or less, with respect to 100 mass% of the cleaning liquid. **In** cases when two or more polyhydric alcohols are used, that content is the total content of these polyhydric alcohols.

Preferred as the glycol ether contained in the cleaning liquid of the present invention are glycol alkyl ethers. Preferred of these are glycol monoalkyl ethers, glycol dialkyl ethers, and glycol monoalkyl ether monoacetates. More preferred are glycol monoalkyl ethers and glycol dialkyl ethers. Especially preferred are glycol monoalkyl ethers.

The alkyl chains in these glycol alkyl ethers (glycol monoalkyl ethers, glycol dialkyl ethers, and glycol monoalkyl acetates) are preferably alkyl chains having 1-8 carbon atoms, more preferably alkyl chains having one or 4-6 carbon atoms.

Preferred as the glycol monoalkyl ethers are: ethylene glycol ether compounds such as ethylene glycol ethers, diethylene glycol ethers, and triethylene glycol ethers; or propylene glycol ether compounds such as propylene glycol ethers, dipropylene glycol ethers, and tripropylene glycol ethers. More preferred are propylene glycol ether compounds.

Preferred of the ethylene glycol ether compounds are diethylene glycol ethers and triethylene glycol ethers. Especially preferred is diethylene glycol monobutyl ether or triethylene glycol monobutyl ether.

Preferred of the propylene glycol ether compounds are dipropylene glycol ethers and tripropylene glycol ethers. Especially preferred are dipropylene glycol monomethyl ether and tripropylene glycol monomethyl ether.

Only one of those glycol ethers may be used, or two or more thereof may be used in combination. Due to the inclusion of the glycol ether, penetrativity to adherent ink components (pigment, binder) can be imparted to the cleaning liquid.

The content of the glycol ether in the cleaning liquid is preferably 0.5 mass% or more and 10 mass% or less, more preferably 0.7 mass% or more and 5 mass% or less, with respect to 100 mass% of the cleaning liquid. **In** cases when two or more glycol ethers are used, that content is the total content of these glycol ethers.

The content ratio (mass ratio) of the polyhydric alcohol to the glycol ether is 3 or larger, more preferably 4.5 or larger, still more preferably 6 or larger. Such content ratios make it possible to obtain a cleaning liquid having high cleaning ability. For the same reason, an upper limit of the content ratio is preferably 30 or less, more preferably 20 or less, still more preferably 15 or less.

The content of water in the cleaning liquid of the present invention is 65 mass% or higher, preferably 68 mass% or more and 95 mass% or less, more preferably 70 mass% or more and 90 mass% or less, with respect to 100 mass% of the cleaning liquid. By regulating the water content to a value within such range, the cleaning ability of the cleaning liquid can be heightened.

The cleaning liquid has a surface tension of 30 mN/m or more and 45 mN/m or less, preferably 30 mN/m or more and 40 mN/m or less. By regulating the surface tension of the cleaning liquid to a value within such range, the cleaning ability of the cleaning liquid can be heightened.

The cleaning liquid preferably further contains a basic compound. The inclusion of a basic compound can further heighten the cleaning ability of the cleaning liquid.

As the basic compound, inorganic base compounds and organic base compounds can be used. Of these, inorganic base compounds are preferred.

Preferred as the organic base compounds are ammonia, alkanolamines, alkylamines, etc. Preferred of these are ammonia, triethylamine, N,N-dimethylaminoethanol, N,N-dibutylaminoethanol, N-methyldiethanolamine, 2-amino-2-methylpropanol, diethanolamine, triethanolamine, N-methylaminoethanol, and N,N-diethylaminoethanol.

Preferred as the inorganic base compounds are hydroxides such as lithium hydroxide, sodium hydroxide, and potassium hydroxide, carbonates such as potassium carbonate and sodium carbonate, and bicarbonates such as potassium hydrogen carbonate and sodium hydrogen carbonate (sodium bicarbonate). Of these, bicarbonates are preferred, and sodium hydrogen carbonate (sodium bicarbonate) is more preferred.

The content of the basic compound is preferably 0.01 mass% or more and 0.5 mass% or less, more preferably 0.05 mass% or more and 0.3 mass% or less, with respect to 100 mass% of the cleaning liquid. By regulating the content of sodium bicarbonate to a value within such range, the cleaning ability of the cleaning liquid can be further heightened.

The cleaning liquid preferably further contains a surfactant. The inclusion of a surfactant can further heighten the cleaning ability of the cleaning liquid. The content of the surfactant is preferably 0.01 mass% or more and 0.5 mass% or less, more preferably 0.05 mass% or more and 0.3 mass% or less, with respect to 100 mass% of the cleaning liquid. By regulating the content of the surfactant to a value within such range, the cleaning ability of the cleaning liquid can be further heightened.

Examples of the surfactant include anionic surfactants, nonionic surfactants, cationic surfactants, amphoteric surfactants, and polymeric surfactants. One of these surfactants may be used alone, or two or more thereof may be used in combination. Preferred as the surfactant are anionic surfactants or nonionic surfactants. More preferred are nonionic surfactants.

Examples of the anionic surfactants include: alkyl sulfate salts such as ammonium dodecyl sulfate and sodium dodecyl sulfate; alkylsulfonate salts such as ammonium dodecylsulfonate, sodium dodecylsulfonate, and sodium alkyl (diphenyl ether)disulfonates; alkylarylsulfonate salts such as ammonium dodecylbenzenesulfonate and sodium dodecylnaphthalenesulfonate; polyoxyethylene alkylsulfonate salts; polyoxyethylene alkyl sulfate salts; polyoxyethylene alkylaryl sulfate salts; dialkyl sulfosuccinate salts; arylsulfonic acid/formalin condensates; fatty acid salts such as ammonium laurylate and sodium stearylate; sulfuric acid esters having an alkyl group or salts of the esters, such as bis(polyoxyethylene polycyclic-phenyl ether)methacrylatesulfonate salts, propenyl alkylsulfosuccinic acid ester salts, (meth)acrylic acid polyoxyethylenesulfonate salts, (meth)acrylic acid polyoxyethylenephosphonate salts, and sulfonate salts of allyloxymethylalkyloxypolyoxyethylenes; and sulfuric acid ester salts of allyloxymethylalkoxyethylpolyoxyethylenes and polyoxyalkylene alkenyl ether sulfuric acid ammonium salts. However, the anionic surfactants are not limited to these examples.

Examples of the nonionic surfactants include polyoxyethylene alkyl ethers, polyoxyethylene alkylaryl ethers, condensates of polyethylene glycol with polypropylene glycol, sorbitan fatty acid esters, polyoxyethylene sorbitan fatty acid esters, fatty acid monoglycerides, condensates of ethylene oxide with aliphatic amines, allyloxymethylalkoxyethyl hydroxypolyoxyethylenes, polyoxyalkylene alkenyl ethers, acetylene glycol compounds, and acetylene alcohol compounds. However, the nonionic surfactants are not limited to these examples. Commercial products of nonionic surfactants may, for example, be used. Examples of the commercial products include "Emulgen (registered trademark) 108" (polyoxyethylene lauryl ether), manufactured by Kao Corporation, "Olfine (registered trademark) E1004 (acetylene glycol compound), manufactured by Nissin Chemical Industry Co., Ltd, and "Nonion EH-204" (polyoxyethylene 2-ethylhexyl ether), manufactured by NOF Corporation.

Examples of the cationic surfactants include alkylammonium salts such as dodecylammonium chloride. However, the cationic surfactants are not limited to these examples.

Examples of the amphoteric surfactants include betaine ester type surfactants. However, the amphoteric surfactants are not limited to these examples.

Examples of the polymeric surfactants include: poly(meth)acrylic acid salts such as poly(sodium acrylate); poly(vinyl alcohol); polyvinylpyrrolidone; poly(hydroxyalkyl (meth)acrylate)s such as poly(hydroxyethyl acrylate); and copolymers each including, as copolymerized component(s), one or more of the monomers for forming these polymers. However, the polymeric surfactants are not limited to these examples.

The cleaning liquid of the present invention may further contain an acid or a salt of the acid. The inclusion of an acid or a salt of the acid tends to enhance the dispersibility of the pigment components contained in inks.

Preferred as the acid are poly((meth)acrylic acid) and aliphatic carboxylic acids. Preferred examples of the aliphatic carboxylic acids include tricarboxylic acids such as tricarballylic acid, dicarboxylic acids such as succinic acid, and monocarboxylic acids such as acetic acid and formic acid. Preferred as the salt are alkali metal salts of these acids. The sodium salts are more preferred. Examples thereof include poly(sodium acrylate), sodium tricarballylate, sodium succinate, sodium acetate, and sodium formate.

The content of the acid and the content of the acid salt are each not particularly limited. However, the total content of the acid and the acid salt is preferably 0.0001 mass% or more and 0.3 mass% or less with respect to 100 mass% of the cleaning liquid.

The cleaning liquid of the present invention may further contain an antiseptic. As the antiseptic, conventionally known ones can be used. Preferred examples thereof include: isothiazolinone-based antiseptics such as methylisothiazolinone; carbamate compounds such as iodopropyl butylcarbamate; pyrithione compounds such as sodium pyrithione; and benzimidazole compounds such as thiabendazole.

The content of the antiseptic is not particularly limited. However, the content thereof is preferably 0.0001 mass% or more and 0.3 mass% or less with respect to 100 mass% of the cleaning liquid.

According to the cleaning liquid for inkjet recording devices of the present invention, it is possible to provide a cleaning liquid for inkjet recording devices having excellent cleaning ability. The cleaning liquid for inkjet recording devices of the present invention is suitable also as a cleaning liquid for inkjet recording devices in which inkjet inks for pigment textile printing applications (inks for textile printing) are used. Since inkjet inks for pigment textile printing applications are required to have high durability, these inkjet inks contain large amounts of binder components, and once the binder components adhere to the heads, it is especially difficult to restore the heads. The cleaning liquid for inkjet recording devices of the present invention has excellent cleaning ability for these inks also.

Although the cleaning liquid for inkjet recording devices of the present invention exhibits excellent cleaning ability against any inks, the cleaning liquid is especially suitable for inks for textile printing, inks containing a binder component in a large amount (e.g., 5 mass% or more), or inks including a polyhydric alcohol, a glycol ether, and water.

The present disclosure further provides a method for cleaning an inkjet recording device, the method including using a composition that includes a polyhydric alcohol, a glycol ether, and water, in which the content ratio (mass ratio) of the polyhydric alcohol to the glycol ether is 3 or larger and the water is contained in an amount of 65 mass% or more with respect to 100 mass% of the composition, and that has a surface tension of 30 mN/m or more and 45 mN/m or less. By this method for cleaning an inkjet recording device, it is possible to efficiently clean the feed lines and inkjet head nozzles of the inkjet recording device.

The method for cleaning an inkjet recording device is especially suitable for cleaning inkjet recording devices in which use is made of an ink for textile printing, an ink containing a binder component in a large amount (e.g., 5 mass% or more), or an ink including a polyhydric alcohol, a glycol ether, and water.

Preferred embodiments (for example, the polyhydric alcohol and glycol ether in the composition, a content ratio between these, water content ratio, surface tension, etc.) of the composition to be used in the method for cleaning an inkjet recording device are respectively independently the same as the preferred embodiments (for example, the polyhydric alcohol and glycol ether in the cleaning liquid, a content ratio between these, water content ratio, surface tension, etc.) described above regarding the cleaning liquid for inkjet recording devices of the present invention.

The method for cleaning an inkjet recording device is not particularly limited, except for using the composition. Examples of the cleaning methods include a method in which an ink bottle which has been used is replaced with a bottle containing a given amount of the composition and the composition is passed through the ink feed lines and the inkjet head nozzles for a given time period. **In** this case, after completion of the passing of the composition, the effect of cleaning can be ascertained by replacing the bottle with an ink bottle and conducting check printing. Besides being replaced with the ink bottle, the bottle containing a given amount of the composition may be installed in another place so that the composition is suitably caused to flow through the ink lines. **In** this case, after completion of the passing of the composition, the effect of cleaning can be ascertained by passing an ink through the ink feed lines and the inkjet head nozzles to conduct check printing.

The method for cleaning an inkjet recording device according to the present disclosure makes it possible to obtain a sufficient cleaning effect even when the amount of the composition to be used for the cleaning is small and/or the cleaning time is short.

The present disclosure still further provides a use, as a cleaning liquid for inkjet recording devices, of a composition that includes a polyhydric alcohol, a glycol ether, and water, in which the content ratio (mass ratio) of the polyhydric alcohol to the glycol ether is 3 or larger and the water is contained in an amount of 65 mass% or more with respect to 100 mass% of the composition, and that has a surface tension of 30 mN/m or more and 45 mN/m or less. The use of the composition as a cleaning liquid for inkjet recording devices makes it possible to efficiently clean the feed lines and inkjet head nozzles of the inkjet recording devices.

The use of the composition as a cleaning liquid for inkjet recording devices is especially suitable for cleaning inkjet recording devices in which use is made of an ink for textile printing, an ink containing a binder component in a large amount (e.g., 5 mass% or more), or an ink including a polyhydric alcohol, a glycol ether, and water.

Preferred embodiments (for example, the polyhydric alcohol and glycol ether in the composition, a content ratio between these, water content ratio, surface tension, etc.) of the composition in the use of the composition as a cleaning liquid for inkjet recording devices are respectively independently the same as the preferred embodiments (for example, the polyhydric alcohol and glycol ether in the cleaning liquid, a content ratio between these, water content ratio, surface tension, etc.) described above regarding the cleaning liquid for inkjet recording devices of the present invention.

### EXAMPLES

The present invention is explained in greater detail by Examples below, but the invention is not limited to the following Examples only. Unless otherwise indicated, "parts" and "%" are "parts by mass" and "mass%", respectively.

Measurement methods and evaluation methods are as follows.

### <Average particle diameter of resin emulsion particles>

A resin emulsion was examined with a particle size distribution analyzer [Product No. nanoSAQLA, manufactured by Otsuka Electronics Co., Ltd.] based on the dynamic light scattering method to determine a volume-based particle size distribution. An average particle diameter obtained therefrom by a cumulant analysis method was taken as the average particle diameter of the resin emulsion particles.

### <Average particle diameter of pigment>

A pigment dispersion was examined with a particle size distribution analyzer [Product No. nanoSAQLA, manufactured by Otsuka Electronics Co., Ltd.] based on the dynamic light scattering method to determine a volume-based particle size distribution. An average particle diameter obtained therefrom by the cumulant analysis method was taken as the average particle diameter of the pigment.

### <Viscosity of inks>

The water-based inks A to C which will be described later were examined with E-type viscometer TPE-100 (manufactured by Toki Sangyo Co., Ltd.) under the conditions of rotor R24, 0.8 degrees, and 25°C.

### <pH of cleaning liquids>

The cleaning liquids of Examples 1 to 13 and Comparative Examples 1 to 5 were each examined with a pH meter (G1500, manufactured by Greisinger GmbH) at 25°C.

<Surface tension of cleaning liquids> The cleaning liquids of Examples 1 to 13 and Comparative Examples 1 to 5 were each examined for surface tension at 25°C with surface tension meter DY-500 (manufactured by Kyowa Interface Science Co., Ltd.) by the Wilhelmy method.

### <Emulsion Production Example>

### [Emulsion Production Example 1]

Deionized water was introduced in an amount of 252 parts by mass into a flask equipped with a dropping funnel, a stirrer, a nitrogen gas introduction tube, a thermometer, and a reflux condenser. A pre-emulsion for dropping composed of 437 parts by mass of deionized water, 80 parts by mass of 25% aqueous solution of an emulsifier [trade name ADEKA REASOAP SR-10, manufactured by ADEKA Corp.], 25 parts by mass of acrylic acid, 565 parts by mass of 2-ethylhexyl acrylate, 50 parts by mass of cyclohexyl methacrylate, 10 parts by mass of hydroxyethyl methacrylate, and 350 parts by mass of styrene was prepared in the dropping funnel, and a 44 parts by mass of the pre-emulsion, which corresponded to 3% of all the monomer components, was introduced into the flask. The contents were heated to 80°C while nitrogen gas was kept being gently fed thereinto. 30 parts by mass of 5% aqueous ammonium persulfate solution was added thereto to initiate polymerization. Thereafter, the remainder of the pre-emulsion for dropping and 30 parts by mass of 5% aqueous ammonium persulfate solution were evenly dropped into the flask over 240 minutes. After completion of the dropping, the contents of the flask were held at 80°C for 180 minutes, and 25% ammonia water and deionized water were added thereto to thereby adjust the pH to 8.5 and the solid content to 50%. Thus, the polymerization was completed. The obtained reaction liquid was cooled to room temperature and then filtered with a 300-mesh metal gauze to thereby obtain an emulsion (emulsion: acrylic). This emulsion had a solid (resin emulsion particles) content of 50% and a Tg of -21°C. The resin emulsion particles had an average particle diameter of 200 nm.

### <Pigment Dispersion Production Examples>

### [Pigment Dispersion Production Example 1]

5 parts by mass of dispersant Discoat N-14 (manufactured by Dai-ichi Kogyo Seiyaku Co., Ltd.), 6 parts by mass of propylene glycol, 70 parts by mass of deionized water, 100 parts by mass of titanium oxide CR-95 (manufactured by Ishihara Sangyo Kaisha, Ltd.), and 50%, in terms of volume ratio, of zirconia beads having a particle diameter of 0.5 mm were charged into a bead mill and dispersed therewith to obtain a white-pigment dispersion having a pigment content of 55% (pigment dispersion: titanium oxide). In the white-pigment dispersion obtained, the pigment had an average particle diameter of 330 nm.

### [Pigment Dispersion Production Example 2]

3 parts by mass of dispersant Joncryl 678 (manufactured by BASF A.G.), 1.3 parts by mass of dimethylaminoethanol, and 81 parts by mass of deionized water were stirred together at 70°C to be mixed. Subsequently, 15 parts by mass of blue pigment C.I. Pigment Blue 15:3 LIONOL BLUE FG-7330 (manufactured by Toyo Ink Mfg. Co., Ltd.), 0.1 parts by mass of surfactant Olfine D-10PG (manufactured by Nissin Chemical Industry Co., Ltd.), and 50%, in terms of volume ratio, of zirconia beads having a particle diameter of 0.5 mm were charged into a bead mill and dispersed therewith. The resultant mixture was filtered with a filter having a pore diameter of 1 µm (MCP-1-C10S, manufactured by Advantec Co.) to thereby obtain a blue-pigment dispersion having a pigment content of 15% (pigment dispersion: cyan). In the blue-pigment dispersion obtained, the pigment had an average particle diameter of 90 nm.

### <Water-based Ink Production Examples>

### [Water-based Ink A Production Example]

Deionized water was added to 20 parts by mass of the acrylic emulsion of Emulsion Production Example 1 (10 parts by mass in terms of the amount of resin emulsion particles), 25 parts by mass of the pigment dispersion of Pigment Dispersion Production Example 1 (14 parts by mass in terms of pigment amount), 15 parts by mass of triethylene glycol, 3.0 parts by mass of diethylene glycol monobutyl ether, and 1.0 parts by mass of surfactant Olfine E1004 (manufactured by Shin-Etsu Chemical Co., Ltd.) so as to result in 100 parts by mass. The ingredients were mixed together and filtered with a filter having a pore diameter of 1 µm (MCP-1-C10S, manufactured by Advantec Co.) to thereby produce water-based ink A.

### [Water-based Ink B production Example]

Deionized water was added to 17 parts by mass of Takelac W6010 (manufactured by Mitsui Chemicals, Inc.; solid content 30%) (5 parts by mass in terms of the amount of resin emulsion particles) as a urethane resin emulsion (emulsion: urethane), 25 parts by mass of the pigment dispersion of Pigment Dispersion Production Example 1 (14 parts by mass in terms of pigment amount), 15 parts by mass of triethylene glycol, 3 parts by mass of diethylene glycol monobutyl ether, and 1.0 parts by mass of surfactant Olfine E1004 (manufactured by Shin-Etsu Chemical Co., Ltd.) so as to result in 100 parts by mass. The ingredients were mixed together and filtered with a filter having a pore diameter of 1 µm (MCP-1-C10S, manufactured by Advantec Co.) to thereby produce water-based ink B.

### [Water-based Ink C Production Example]

Deionized water was added to 20 parts by mass of the acrylic emulsion of Emulsion Production Example 1 (10 parts by mass in terms of the amount of resin emulsion particles), 23 parts by mass of the pigment dispersion of Pigment Dispersion Production Example 2 (3.5 parts by mass in terms of pigment amount), 15 parts by mass of triethylene glycol, 3.0 parts by mass of diethylene glycol monobutyl ether, and 1.0 parts by mass of surfactant Olfine E1004 (manufactured by Shin-Etsu Chemical Co., Ltd.) so as to result in 100 parts by mass. The ingredients were mixed together and filtered with a filter having a pore diameter of 1 µm (MCP-1-C10S, manufactured by Advantec Co.) to thereby produce water-based ink C.

Table 1 shows the formulations for the inks produced.

### [Table 1]

**Table 1**

| | | Water-based ink A | Water-based ink B | Water-based ink C |
|---|---|---|---|---|
| Pigment dispersion | | titanium oxide | titanium oxide | cyan |
| Emulsion | | acrylic | urethane | acrylic |
| <Content (mass%) based on 100 mass% of ink> | | | | |
| Pigment | Solid content | 14 | 14 | 3.5 |
| | Propylene glycol | 0.8 | 0.8 | 0 |
| | Dimethylaminoethanol | 0 | 0 | 1.3 |
| | Dispersant | 0.7 | 0.7 | 3 |
| Resin emulsion particles | | 10 | 5.0 | 10 |
| Triethylene glycol | | 15 | 15 | 15 |
| Diethylene glycol monobutyl ether | | 3.0 | 3.0 | 3.0 |
| Olfine E1004 | | 1.0 | 1.0 | 1.0 |
| Water | | balance | balance | balance |
| Viscosity (mPa·s) | | 5 | 5 | 5 |
| Surface tension (mN/m) | | 26 | 29 | 27 |

### [Example 1]

### (Production of Cleaning Liquid)

20 parts by mass of triethylene glycol, 3 parts by mass of diethylene glycol monobutyl ether, 0.1 parts by mass of surfactant Olfine E1004 (manufactured by Shin-Etsu Chemical Co., Ltd.), and 76.9 parts by mass of deionized water were mixed together. The mixture was filtered with a filter having a pore diameter of 1 µm (MCP-1-C10S, manufactured by Advantec Co.) to thereby produce a cleaning liquid (1).

### [Examples 2 to 13 and Comparative Examples 1 to 5]

Cleaning liquids (2) to (13) according to Examples 2 to 13 and cleaning liquids (c1) to (c5) according to Comparative Examples 1 to 5 were each produced in the same manner as in Example 1, except that the kinds and amounts of the ingredients in Example 1 of "(Production of Cleaning Liquid)" were changed as shown in Tables 2 to 4 and that the total amount was adjusted to 100 parts by mass by regulating the amount of deionized water to be introduced.

The cleaning liquids produced in the Examples and Comparative Examples were evaluated for head nozzle restoration property in accordance with the following evaluation criteria. The results are shown in Tables 2 to 4.

### <Evaluation of Ejection Failure Remedy Properties>

Water-based ink A was filled into textile printer MMP-TX13, manufactured by Mastermind Co., and three sheets of cotton fabric (cotton 100% white T-shirt manufactured by Hanes, Inc.) were consecutively subjected to 120 mm × 120 mm solid printing under the conditions of 1440 dpi × 1440 dpi and a set printing speed of 8. Thus, the inkjet head was ascertained to be filled with the ink. Thereafter, the inkjet head in an uncapped state was allowed to stand for one week in an environment having a temperature of 23°C and a humidity of 50%. The standing without a cap made the ink dry and tenaciously adhere. After the standing, nozzle check printing was carried out (all the 180 nozzles were successively made to eject the ink to print ruled lines). As a result, it was ascertained that 10 or more nozzles underwent scattering (deflection) or dot skipping due to ink ejection failure.

The recording head having the ink ejection failure was filled for 10 minutes, in the filling mode, with each of the cleaning liquids of Examples 1 to 13 and Comparative Examples 1 to 5 and cleaned therewith. Thereafter, water-based ink A was filled again into the head and nozzle check printing was conducted. The remedy properties of the ejection failure were evaluated in accordance with the following evaluation criteria.

Water-based inks B and C were also subjected to the same evaluation.

### (Evaluation Criteria)

∘∘: None of scatterings (deflections) and missing dots in the nozzle check printing after cleaning with cleaning liquid and ink re-filling.
∘: One or two of scatterings (deflections) and missing dots in the nozzle check printing after cleaning with cleaning liquid and ink re-filling.
Δ: Three or four of scatterings (deflections) and missing dots in the nozzle check printing after cleaning with cleaning liquid and ink re-filling.
×: Five or more of scatterings (deflections) and missing dots in the nozzle check printing after cleaning with cleaning liquid and ink re-filling.

### [Table 2]

**Table 2**

| | Example 1 | Example 2 | Example 3 | Example 4 | Example 5 | Example 6 | Example 7 | Example 8 | Example 9 |
|---|---|---|---|---|---|---|---|---|---|
| Triethylene glycol | 20 | 20 | 10 | 25 | 10 | 10 | 0 | 0 | 20 |
| Diethylene glycol | 0 | 0 | 0 | 0 | 0 | 0 | 20 | 0 | 0 |
| Glycerin | 0 | 0 | 0 | 0 | 0 | 0 | 0 | 20 | 0 |
| Diethylene glycol monobutyl ether | 3 | 3 | 3 | 2 | 2 | 1 | 3 | 3 | 0 |
| Triethylene glycol monobutyl ether | 0 | 0 | 0 | 0 | 0 | 0 | 0 | 0 | 3 |
| Olfine E1004 | 0.1 | 0.1 | 0.5 | 0.1 | 0.05 | 0.01 | 0.1 | 0.1 | 0.1 |
| Sodium bicarbonate | 0 | 0.1 | 0.1 | 0.1 | 0.1 | 0.1 | 0.1 | 0.1 | 0.1 |
| Water | balance | balance | balance | balance | balance | balance | balance | balance | balance |
| Solvent ratio (polyhydric alcohol/glycol ether) | 7 | 7 | 3 | 13 | 5 | 10 | 7 | 7 | 7 |
| pH | 6 | 8 | 8 | 8 | 8 | 8 | 8 | 8 | 8 |
| Surface tension (mN/m) | 33 | 34 | 31 | 32 | 38 | 42 | 33 | 34 | 33 |
| Head nozzle restoration properties | | | | | | | | | |
| Water-based ink A | ○ | ○○ | ○ | ○○ | ○ | ○ | ○○ | ○ | ○ |
| Water-based ink B | ○ | ○○ | ○ | ○ | ○ | ○ | ○ | ○ | ○ |
| Water-based ink C | ○ | ○○ | ○○ | ○○ | ○○ | ○ | ○○ | ○ | ○○ |

### [Table 3]

**Table 3**

| | Comparative Example 1 | Comparative Example 2 | Comparative Example 3 | Comparative Example 4 | Comparative Example 5 |
|---|---|---|---|---|---|
| Triethylene glycol | 20 | 20 | 0 | 40 | 30 |
| Diethylene glycol | 0 | 0 | 0 | 0 | 0 |
| Glycerin | 0 | 0 | 0 | 0 | 0 |
| Diethylene glycol monobutyl ether | 15 | 5 | 10 | 10 | 0 |
| Triethylene glycol monobutyl ether | 0 | 0 | 0 | 0 | 0 |
| Olfine E1004 | 0.5 | 1.5 | 0.1 | 1 | 1 |
| Sodium bicarbonate | 0 | 0.1 | 0.1 | 0.1 | 0.1 |
| Water | balance | balance | balance | balance | balance |
| Solvent ratio (polyhydric alcohol/glycol ether) | 1 | 4 | 0 | 4 | - |
| pH | 6 | 8 | 8 | 8 | 8 |
| Surface tension (mN/m) | 29 | 27 | 46 | 27 | 29 |
| Head nozzle restoration properties | | | | | |
| Water-based ink A | × | × | × | × | × |
| Water-based ink B | × | × | × | × | × |
| Water-based ink C | Δ | × | × | Δ | × |

### [Table 4]

**Table 4**

| | Example 10 | Example 11 | Example 12 | Example 13 |
|---|---|---|---|---|
| Triethylene glycol | 20 | 10 | 20 | 10 |
| Dipropylene glycol monomethyl ether | 3 | 3 | 0 | 0 |
| Tripropylene glycol monomethyl ether | 0 | 0 | 3 | 3 |
| Olfine E1004 | 0.1 | 0.5 | 0.1 | 0.5 |
| Sodium bicarbonate | 0.1 | 0.1 | 0.1 | 0.1 |
| Water | balance | balance | balance | balance |
| Solvent ratio (polyhydric alcohol/glycol ether) | 7 | 3 | 7 | 3 |
| pH | 8 | 8 | 8 | 8 |
| Surface tension (mN/m) | 35 | 33 | 35 | 33 |
| Head nozzle restoration properties | | | | |
| Water-based ink A | ○○ | ○○ | ○○ | ○○ |
| Water-based ink B | ○○ | ○ | ○○ | ○○ |
| Water-based ink C | ○○ | ○○ | ○○ | ○○ |

The cleaning liquids of Examples, in each of which (1) the content ratio (mass ratio) of the polyhydric alcohol to the glycol ether was 3 or larger and (2) the water content was 65 mass% or higher with respect to 100 mass% of the cleaning liquid and (3) which each had a surface tension of 30 mN/m or more and 45 mN/m or less, had excellent cleaning ability against the adherent residue of each of water-based inks A, B, and C, which each contained 5-10 mass% binder component.

Meanwhile, the cleaning liquids of Comparative Examples 1, 3, and 5, which did not satisfy (1) and (3) above, the cleaning liquid of Comparative Example 2, which did not satisfy (3) above, and the cleaning liquid of Comparative Example 4, which did not satisfy (2) and (3) above, had poor cleaning ability.

### INDUSTRIAL APPLICABILITY

The cleaning liquid for inkjet recording devices of the present invention exhibits excellent cleaning ability against any inks, but is especially suitable for inks for textile printing, inks containing a binder component in a large amount (e.g., 5 mass% or more), or inks including a polyhydric alcohol, a glycol ether, and water.

## Claims

1. A cleaning liquid for inkjet recording devices comprising a polyhydric alcohol, a glycol ether, and water, wherein
a content ratio (mass ratio) of the polyhydric alcohol to the glycol ether is 3 or larger,
the water is contained in the cleaning liquid in an amount of 65 mass% or more with respect to 100 mass% of the cleaning liquid, and
the cleaning liquid has a surface tension of 30 mN/m or more and 45 mN/m or less.

2. The cleaning liquid according to claim 1, wherein the polyhydric alcohol comprises a dihydric alcohol and/or a trihydric alcohol.

3. The cleaning liquid according to claim 1 or 2, wherein the glycol ether comprises a glycol monoalkyl ether.

4. The cleaning liquid according to claim 1 or 2, which further comprises a basic compound.

5. The cleaning liquid according to claim 3, which further comprises a basic compound.
